(19)

Europäisches
Patentamt
European
Patent Office
Office européen
des brevets

(11) **EP 2 960 905 A1**

(12) **EUROPEAN PATENT APPLICATION**

(43) Date of publication:
**30.12.2015 Bulletin 2015/53**

(51) Int Cl.:
**G11B 27/00** (2006.01)    **H04N 21/433** (2011.01)
**H04N 21/44** (2011.01)

(21) Application number: **14306001.0**

(22) Date of filing: **25.06.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Thomson Licensing
92130 Issy-les-Moulineaux (FR)**

(72) Inventors:
• **Varanasi, Kiran
35576 Cesson-Sévigné (FR)**

• **Baillard, Caroline
35576 Cesson-Sévigné (FR)**
• **Le Clerc, François
35576 Cesson-Sévigné (FR)**

(74) Representative: **Huchet, Anne
Technicolor
1-5 rue Jeanne d'Arc
92130 Issy-Les-Moulineaux (FR)**

(54)    **Method and device of displaying a neutral facial expression in a paused video**

(57)    A method of displaying a neutral facial expression in a paused video includes analyzing contiguous frames of a video to find neutral facial expressions and associating one of the neutral facial expression frames with each frame in the video. Upon reception of a pause instruction, synthesizing a set of frames that transition from the associated neutral expression frame to a pause frame. The synthesized frames are played in reverse, whereby the played frames transition from the pause frame to the associated neutral expression frame. Thus, the neutral facial expression frame is displayed on the video player while the video is paused instead of displaying the normal pause frame.

Fig. 4
Flow Diagram

**EP 2 960 905 A1**

**Description**

**FIELD**

The present invention relates to video processing, and in particular, is related to a scheme pausing a video playback such that a neutral video facial expression is displayed while paused.

**BACKGROUND**

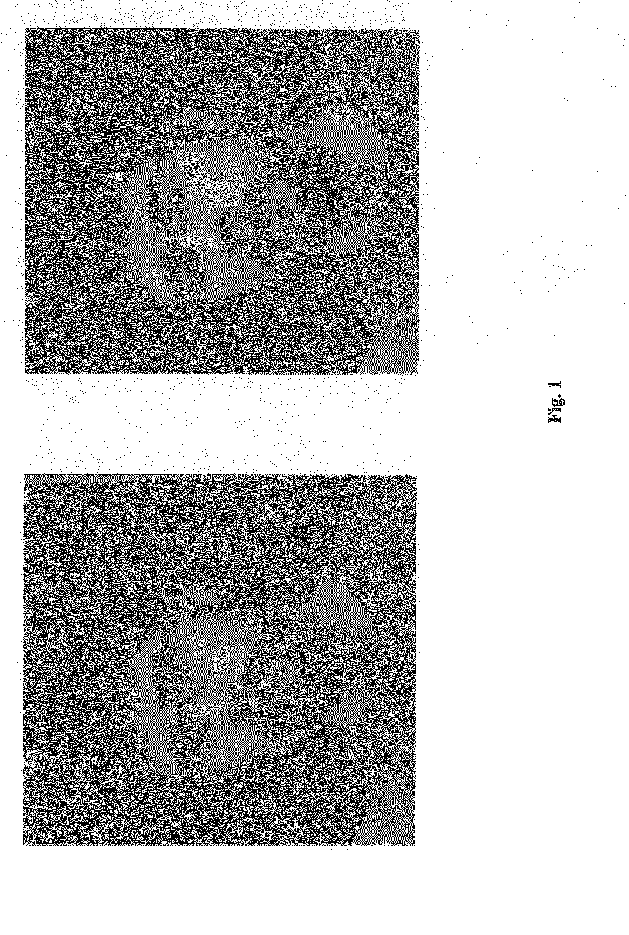

Unlike the traditional video broadcast on television, internet video is often viewed on devices that can be paused. However, pausing a video might freeze the display at a frame where the image visuals are blurred or unsatisfactory. This phenomenon can occur due to low capture frame-rate in the video, or compression artifacts in the video format. These artifacts are particularly jarring when watching the video of a person talking. Humans with their natural eyesight do not see many facial poses because they transition very rapidly during speech. So when the facial video is frozen at an arbitrary instant, it leads to an unnatural impression on the viewer. Figure 1 depicts the slightly awkward effects of arbitrarily pausing a video of someone talking. But pausing facial videos in mid-dialogue occurs very regularly on the internet. Examples of this occurrence are (a) network break-down during a video conference, (b) pausing for digesting information during an online course, and (c) an arbitrary interruption from the real world.
Existing software for video players has overlooked this problem. Considering the ubiquity of the problem and the potential scope of the solution, this is a major oversight from technology developers.

**SUMMARY**

This summary is provided to introduce a selection of concepts in a simplified form as a prelude to the more detailed description that is presented later. The summary is not intended to identify key or essential features of the invention, nor is it intended to delineate the scope of the claimed subject matter.
In one embodiment, a method of displaying a neutral facial expression in a paused video includes analyzing contiguous frames of a video to find neutral facial expressions. Upon reception of a pause instruction, a set of frames are synthesized that transition a display from the neutral facial expression frame to the paused frame resulting from the pause instruction. The synthesized frames are played in reverse, whereby the played frames transition from the pause frame to the neutral facial expression frame. Thus, displaying the neutral facial expression frame while the video is paused instead of displaying the pause frame.
In another embodiment, frames of video are analyzed during playback of a human subject using a video player. The video frames are analyzed using an Active Appearance Model (AAM) based detector. The detector automatically selects a frame that shows the human subject of the video having a neutral facial expression. The video player then displays the neutral expression frame of the human subject instead of the arbitrary frame being shown when the video was paused.
Additional features and advantages of the invention will be made apparent from the following detailed description of illustrative embodiments which proceeds with reference to the accompanying figures. It should be understood that the drawings are for purposes of illustrating the concepts of the disclosure and is not necessarily the only possible configuration for illustrating the disclosure.

**BRIEF DESCRIPTION OF THE DRAWINGS**

The foregoing summary of the invention, as well as the following detailed description of illustrative embodiments, is better understood when read in conjunction with the accompanying drawings, which are included by way of example, and not by way of limitation with regard to the claimed invention. In the drawings, like numbers represent similar elements.

Figure 1 illustrates typical examples of pausing a video in mid dialogue;
Figures 2a and 2b illustrate facial landmarks in a typical paused video frame;
Figure 2c illustrates facial landmarks for a neutral facial expression;
Figure 3 illustrates examples of facial landmark differences between a neutral expression frame and a target pause frame;
Figure 4 depicts an example flow diagram of the current invention; and
Figure 5 illustrates an example media device block diagram containing aspects of the current invention.

## DETAILED DISCUSSION OF THE EMBODIMENTS

In the following description of various illustrative embodiments, reference is made to the accompanying drawings, which form a part thereof, and in which is shown, by way of illustration, how various embodiments in the invention may be practiced. It is to be understood that other embodiments may be utilized and structural and functional modification may be made without departing from the scope of the present invention.

One advantage of the current invention is providing a solution for bringing an arbitrarily paused video pause frame having an awkward facial expression to a neutral facial expression frame whenever the video is paused. This corresponds to the natural phenomenon of bringing the speaker to rest in a relaxed state with low energy costs. The effect is to quickly transition the odd expression pause frame of a played video to a neutral expression frame. The neutral expression frame is the frame that is held for display for the duration of the pause event.

To accomplish this transition, extra frames are synthesized and then displayed. These transitional frames show the actor transitioning from the moment the video is arbitrarily paused to a previous moment where the actor is shown to have a neutral expression. Later, when the video is resumed, the previously played transitional frames are now played in an order opposite of their previous play so that the actor returns from his/her neutral expression frame to the original arbitrary pause frame, before playback actually resumes.

In order to achieve this synthesis, the facial expressions of the speaker are tracked using an AAM (active appearance model) based tracker. An active appearance model (AAM) is a computer vision algorithm for matching a statistical model of object shape and appearance to a new image. The algorithm uses the difference between the current estimate of appearance and the target image to drive an optimization process. By taking advantage of the least squares techniques, it can match to new images very swiftly.

In general, the number of landmarks (and their locations) is preferably large enough to capture the geometries of facial expressions. In one aspect of the invention, a set of 50 to 60 facial landmarks (eyes, nose, mouth etc) are tracked and is considered adequate. Even larger numbers of landmarks and locations may be used. In one preferred embodiment, an AAM tracker is used with front-facing videos with small out-of-plane rotations (tilt of the head to the left or to the right). However, other face tracking algorithms can be used, some with depth sensors, to accommodate greater out of plane rotations. Expression detection/classification of facial expressions is known in the art. One example reference is "Evaluating AAM Fitting Methods for Facial Expression Recognition", by A. Asthana et al., in the Proceedings of the Workshops of the 3rd International Conference on Affective Computing and Intelligent Interaction (ACII 2009).

During the course of speaking, the facial video typically (but not always) shows a number of frames where the neutral facial expression is available. In a pre-processing step, a detector is used for identifying such frames in the video. Then for every video frame, an assignment or association is made to the nearest such frame as a neutral facial expression pose. Thus, when the video is paused, the video can be paused at a frame that is already available in the video and thus not unnatural to the user.

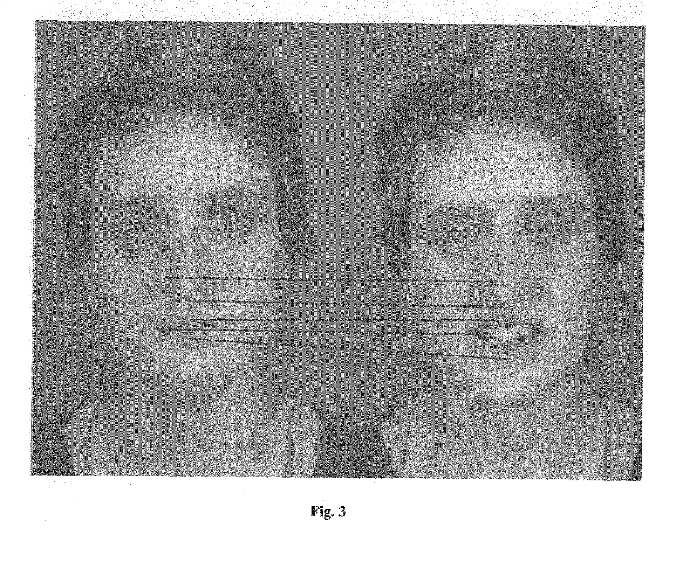

In one aspect of the invention, a user of a video player presses the pause button and activates the smart-pause function effect of the current invention. Upon activation of a pause button in a video player having the described invention, a method is executed that finds 2D (two dimensional) positional constraints to move the set of landmarks at the chosen (paused) video frame to the corresponding locations of the nearest neutral expression frames in the played video. Video frames are known to be contiguous, occurring one after another, with small changes between each contiguous frame. Example constraints are shown in Figure 3. These 2D positional constraints define sparse samples from a dense 2D image warp (transition) that moves each image pixel to a new location.

A mathematical model for the analysis and synthesis is as follows. Consider a face in the neutral pose or expression as source s and the face in the chosen (arbitrary pause) frame as target t. Computing the transition from s to t and applying this transition in the reverse order moves the paused frame to the neutral expression frame. A face in the neutral expression does not show teeth or the mouth interior, whereas the arbitrary pause frame might indeed show them. The calculated transition implicitly compresses the region corresponding to the mouth interior to zero and expands the regions around the mouth.

Let the 2D vertex locations of the landmarks in the neutral expression source frame and arbitrarily paused target frame be $s_1, s_2, ..., s_n$ and $t_1, t_2, ..., t_n$ respectively. Given an arbitrary pixel x, its optimal 2D transformation can be found to move it to neutral pose $x' = M_x(x)$.

Muller et al. defined minimization energy in "Meshless deformations based on shape matching" M. Muller, B. Heidelberger, M. Teschner, and M. Gross. ACM Trans. on Graphics 24(3):471-478, July 2005. Following the minimization energy defined by Muller et al., this transformation $M_x$ is obtained using moving least squares as

$$M_x = Argmin_M \sum_{i=1}^{n} \frac{1}{|x - s_i|^2} (M(s_i) - t_i)^2$$

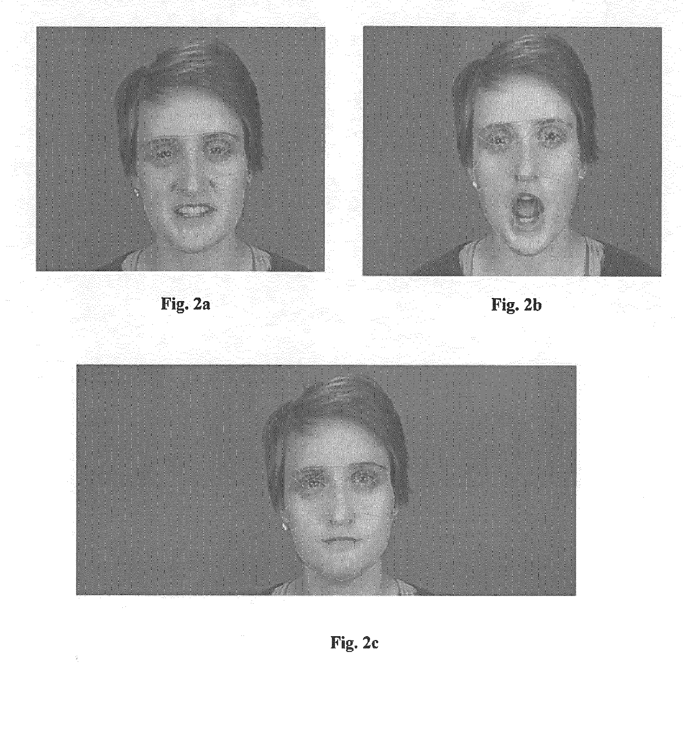

It is possible to estimate the optimal 2D transformation $M_x$ by extending this energy with other regularizations, e.g., by taking into account the structural properties of the landmarks which may define a manifold mesh L. Figures 2a and 2b illustrate the manifold mesh L in non-neutral, arbitrarily selected frames of a video. Figure 2c illustrates the manifold mesh L in a neutral expression frame.

$$M_x = Argmin_M \sum_{i=1}^{n} \frac{1}{|x - s_i|^2} (M(s_i) - t_i)^2 + |\nabla L.M - \delta x|$$

Here, VL denotes the Laplacian differential operator on the mesh of landmarks L, and $\delta x$ denotes the differential coordinates of the pixel x with respect to the neighboring vertices in the mesh.

In one embodiment of the current invention, a sequence of f frames is synthesized by applying the transformation gradually from identity matrix I to the target transform $M_x$, by producing the frame t in the synthesized sequence as

$$M_x^t = (\frac{1-t}{f} I + \frac{t}{f} M_x)$$

The transition is applied by showing this sequence of frames in the reverse i.e., transforming the pixels towards the neutral expression from $M_x^f$ to $M_x^0$. Alpha blending may also be applied between the target and source frames, such that the mouth interior regions fade away gradually. This transition sequence generally lasts only a fraction of a second in time. This corresponds to the real-world closure of the mouth and bringing the face to neutral expression and thus, the user does not have time to inspect the artifacts within this transition. Instead, when the video is paused and a neutral facial expression that already exists in the video is shown, any visual artifacts are not noticed.

In one embodiment, the sequence of f frames that are synthesized is the empty set. In this special case, the target or paused video frame is transitioned directly from the arbitrarily paused video frame to the desired neutral expression frame without intermediate facial expression frames. Essentially, the paused video frame is substituted with the closest neutral facial expression frame so that the neutral expression frame is displayed while the pause mode of the video player device is active. Although the transition from an arbitrary pause frame to a neutral expression frame can be abrupt, it achieves the purpose of avoiding a non-neutral expression being displayed for the duration of the pause event.

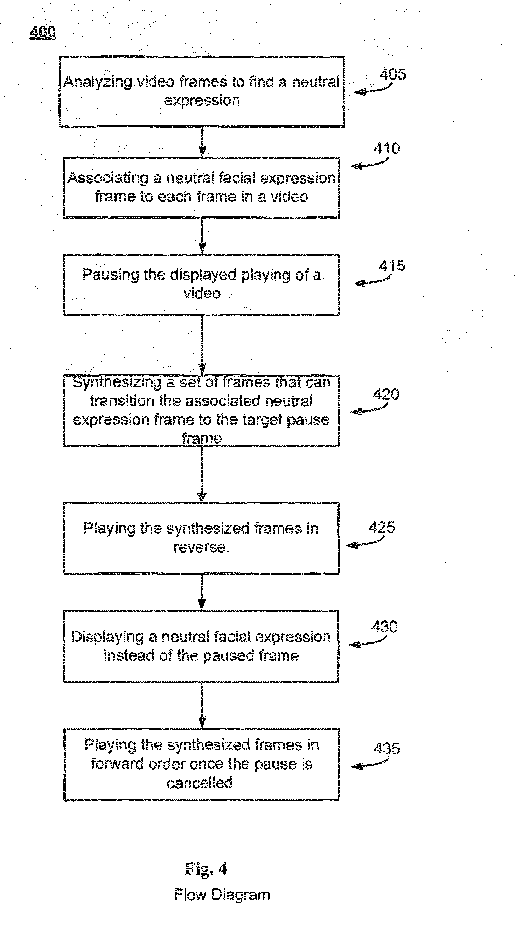

Figure 4 depicts one example method 400 of the present invention. One of skill in the art will recognize that variations are possible within the context of the invention. At step 405, video frames are analyzed to find a neutral expression. This is accomplished using a detector/processor executing an active appearance model (AAM) wherein neutral expression constraints are examined. This step can be accomplished in a set of video frames that are already stored in a video playback device. Alternately, this step can be accomplished using a set of video frames that are presented to a neutral facial expression detector where the incoming video frames are streamed into a video playback device. The detector can be a processor, controller, or other device adapted to detect neutral facial expressions using an active appearance model (AAM) algorithm. Such a detector can be a hardware, software, or a combination of both.

At step 410, each video frame of the video is associated with a detected neutral expression or neutral pose frame that is close in contiguous frames or playback time. That is, analyzed non-neutral expression video frames are automatically associated with the nearest neutral pose or expression frame. This association can be accomplished via tagging or marking with metadata associated with the frame and can take the form of additional frame data, a table, or other mapping feature or structure in memory that is used in conjunction with the analyzed video frames. This step is performed so that every frame, if selected as a pause frame, has a reference to a neutral facial expression frame that the current invention can transition to avoid display of a non-neutral facial expression.

Having analyzed or pre-processed the video frames to determine the closest neutral expression frame, the method 400 can commence with step 415. Pausing a played video in step 415 starts the process of synthesis. To pause a playing video, a pause instruction is received by the video playback device. The video, if played on a video player or other media player may be paused by operation of a user operated remote control or a direct control interface button on a video playback device. Such a playback device can be any such device known to those of skill in the art such as a mobile device, portable digital assistant, tablet, television, set-top box, laptop, cell phone, dedicated media player, or any convergence of devices capable of playing back or streaming of video content.

After video playback is paused, synthesis of video frames begins at step 420. According to one aspect of the invention, synthesis of video frames is generated from the closest neutral expression frame to the target pause frame. The target pause frame is simply the frame that would be displayed as a result of a pause operation absent the current invention. Synthesized frames are frames selected from the video and placed in a sequence that moves from the non-neutral pause frame to the neutral expression frame within a short number of frames. The number of frames that are synthesized is not fixed and can be a few dozen to as few as zero.

After frame synthesis, at step 425, the frames, which were generated in an order from the closest neutral expression frame to the non-neutral pause frame, are played back as a transition video and thus displayed in reverse order. This results in a brief transition video, made from the synthesized frames, showing the actor moving from the non-neutral pause frame to the neutral expression frame. The transition video is typically played at approximately 30 frames per second. If at step 420, a few dozen frames were synthesized, then the transition video generated from the synthesized frames at step 425 from the pause frame to the neutral expression frame is longer in time and possibly observable. If zero frames are synthesized in step 420, then the displayed image snaps quickly to the neutral expression frame at step 425.

At step 430, the neutral expression frame is displayed at the end of the transition video resulting from the frame play at step 425. The neutral expression frame is thus shown after a pause event instead of the pause frame. The neutral expression frame then remains displayed until the pause function of the video playback device is released.

In a further embodiment, once the pause function of the video playback device is released, that is, playback of the video is resumed, then the synthesized frames are played in the order of their generation at step 435. This effectively displays the short transition video, generated by the synthesized frames, showing the actor moving from a neutral expression to the non-neutral pause frame. At the end of the transition video, once the pause frame is displayed, the video playback can continue. Once again, if zero frames were synthesized in step 420, then the displayed image snaps quickly to the neutral expression frame at step 425. If a multitude of frames were synthesized, then the transition video frames from the neutral expression to the pause frame will be longer in playback length.

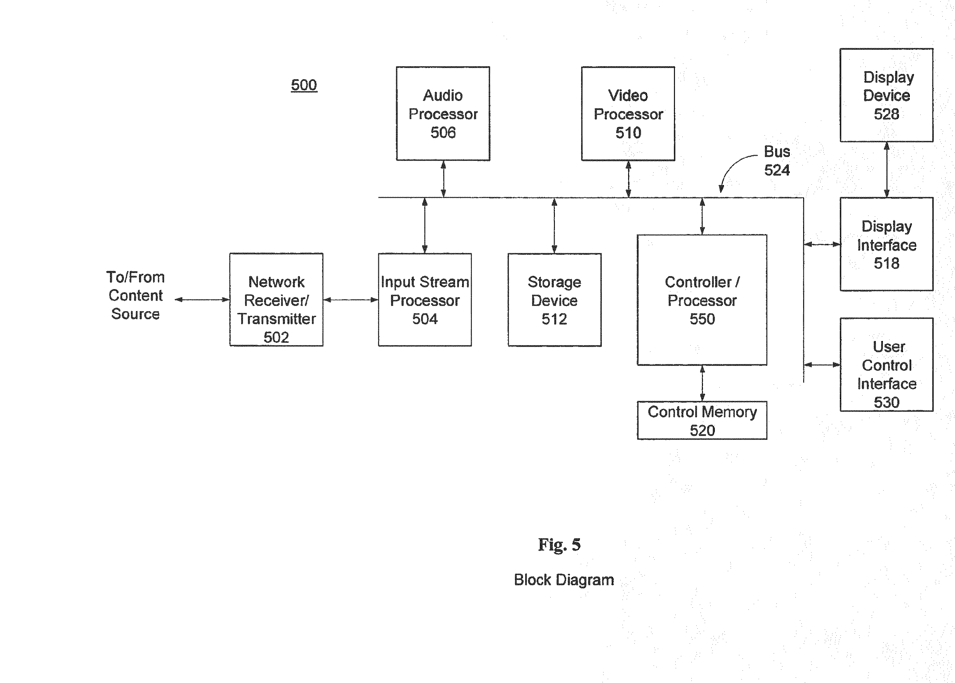

Turning now to Figure 5, a block diagram of an embodiment of a video playback device 500 is shown. The video playback device may also be termed a media device or a receiving device because it can be used to playback multimedia digital content from a content source. The video playback device 500 can be included as part of a gateway device, modem, set-top box, computer, laptop, cell phone, or other similar communications device. The media device 500 shown can also be incorporated into other systems. In either case, several components necessary for complete operation of the system are not shown in the interest of conciseness, as they are well known to those skilled in the art. In one exemplary embodiment, video playback device 500 can be a set top box coupled to a display device (e.g. television). In another embodiment, the video playback device can be a hand-held (i.e. mobile) or fixed location display device that allows playback of media files having a video element.

In the video device 500 shown in Figure 5, the digital content is received by a network communication interface; network receiver/transmitter 502. The network receiver/transmitter 502 can be one of several known receiver circuits used for receiving, demodulation, and decoding signals provided over one of the several possible networks including over the air, cable, satellite, Ethernet, USB, HDMI, fiber, and phone line networks. The desired input signal can be selected and retrieved by the network receiver/transmitter 502 based on user input provided through a user control interface 530 such as a mouse, keyboard, pushbuttons, touch screen, remote control, wired or wireless interfaces, and the like.

In one embodiment, one or more digital busses 524 interconnect the controller processor 550 with other functional blocks. One of skill in the art recognizes that non-bus-oriented topologies are also possible implementations of the media device 500. Blocks that have a bus 524 interface with the processor 550 include input stream processor 504, storage device 512, audio processor 506, video processor 510, and display interface 518. The controller/processor 550 can be configured to control various components of the video playback device 500. In one embodiment, the controller/processor 550 may also include the resources needed to execute the active appearance model (AAM) detection of neutral frames. In another embodiment, the input stream processor 504 may provide the AAM detector functionality.

The decoded output signal of network receiver/transmitter 502 is provided to an input stream processor 504. The input stream processor 504 performs the final signal selection and processing, and includes separation of video content from audio content for the content stream. As mentioned above, in one embodiment, the AAM detection can be located in the input stream processor 504 as an alternative to the AAM functionality in the controller processor 550. The audio content is provided to an audio processor 506 for conversion from the received format, such as compressed digital signal, to an analog waveform signal or equivalent digital audio for use by an output device, such as in display device 528. In one embodiment, a digital audio signal from audio processor 506 can be used to drive a display device using a High-Definition Multimedia Interface (HDMI) cable or alternate audio interface such as via a Sony/Philips Digital Interconnect Format (SPDIF) (not shown). One version of audio interface can also include amplifiers for driving one more sets of speakers. The audio processor 506 also performs any necessary conversion for the storage of the audio signals.

The video output from the input stream processor 504 is provided to a video processor 510 via a bus 524. The video signal can be one of several formats. The video processor 510 provides, as necessary, a conversion of the video content, based on the input signal format. The video processor 510 also performs any necessary conversion for the storage of the video signals. In one embodiment, the video processor 510 may be part of or closely coupled with controller processor 550 and the combination is responsible for execution of the AAM detection of a neutral facial expression in incoming or stored video.

A storage device 512 stores audio and video content received at the input from the content source. The storage device 512 allows later retrieval and playback of the content under the control of a controller 550 and also based on commands, e.g., navigation instructions such as fast-forward (FF) rewind (RW), pause, and play, received from a user interface 530 such as a control panel, touch screen, remote control, or other use interface. The storage device 512 can be a hard disk drive, one or more large capacity integrated electronic memories, such as static RAM (SRAM), or dynamic RAM (DRAM), or can be an interchangeable optical disk storage system such as a compact disk (CD) drive or digital video disk (DVD) drive.

The converted video signal, from the video processor 510, either originating from the input or from the storage device 512, is provided to the display interface 518. The display interface 518 further provides the display signal to a display device 528. The display interface 518 can be an analog signal interface such as red-green-blue (RGB) or can be a digital interface such as HDMI.

In one embodiment, the controller/processor 550 hosts the display formatter for the user interface for display on display device 528. In one embodiment, the controller/processor 550 also manages the conversion process for converting the input stream signal into a signal for storage on the storage device or for display. The controller/processor 550 also manages the retrieval and playback of stored content. In one embodiment, the AAM detector, which may be a hardware or software element, is used to detect neutral facial expressions in frames of either incoming streamed or previously stored video frames. Pause, playback, rewind, fast forward, and other video controls may be input to video device 500 via the user interface 530. Synthesis of transition frames from a detected neutral expression frame to a pause frame as described above may be conducted in the controller processor 550. In an alternate embodiment, such synthesis may be performed in the video processor 510.

The controller/processor 550 is further coupled to control memory 520 (e.g., volatile or non-volatile memory, including RAM, SRAM, DRAM, ROM, programmable ROM (PROM), flash memory, electronically programmable ROM (EPROM), electronically erasable programmable ROM (EEPROM), etc.) for storing information and instruction code for controller/processor 550. Control memory 520 can store instructions for controller/processor 550. Further, the implementation of the control memory 520 can include several possible embodiments, such as a single memory device or, alternatively, more than one memory circuit communicatively connected or coupled together to form a shared or common memory. Still further, the memory can be included with other circuitry, such as portions of bus communications circuitry, in a larger circuit.

Optionally, controller/processor 550 can be adapted to create, tag, code, mark, amend or otherwise edit metadata associated with video frames. As such, in one embodiment, the association of a neutral facial expression location with other nearby frames may be performed by the controller/processor in conjunction with video frames stored in storage device 512 or in conjunction with frames being streamed to the video processor 510.

In one embodiment, a method of displaying a neutral facial expression in a paused video includes analyzing contiguous frames of a video to find neutral facial expressions and associating one of the neutral facial expression frames with each frame in the video. A pause instruction is received that pauses the playback of the continuous frames on a video player, where the pause occurs on a pause frame. A set of frames is synthesized that transition from the associated neutral facial expression frame to the pause frame. Then, the synthesized frames are played in reverse, whereby the played frames transition from the pause frame to the associated neutral facial expression frame. The neutral facial expression frame is displayed on the video player while the video is paused instead of displaying the pause frame.

In one embodiment, an apparatus to display a neutral facial expression in a paused video includes a processor to detect neutral facial expressions in a set of contiguous video frames. The processor associates one of the neutral facial expression frames with each frame in a video played on the apparatus. A user control interface is used for receiving a pause instruction in order to pause the video played by the apparatus. The pause action occurring on a pause frame. A set of frames is synthesized that transition the associated neutral facial expression frame to the pause frame. The apparatus can then play the synthesized frames in reverse order, whereby the played frames transition from the pause frame to the associated neutral facial expression frame. A display device is utilized for displaying the neutral facial expression frame on the video player while the video is paused instead of displaying the pause frame.

The implementations described herein may be implemented in, for example, a method or process, an apparatus, or a combination of hardware and software. Even if only discussed in the context of a single form of implementation (for example, discussed only as a method), the implementation of features discussed may also be implemented in other forms. For example, implementation can be accomplished via a hardware apparatus, hardware and software apparatus. An apparatus may be implemented in, for example, appropriate hardware, software, and firmware. The methods may be implemented in, for example, an apparatus such as, for example, a processor, which refers to any processing device, including, for example, a computer, a microprocessor, an integrated circuit, or a programmable logic device.

Additionally, the methods may be implemented by instructions being performed by a processor, and such instructions may be stored on a processor or computer-readable media such as, for example, an integrated circuit, a software carrier or other storage device such as, for example, a hard disk, a compact diskette ("CD" or "DVD"), a random access memory ("RAM"), a read-only memory ("ROM") or any other magnetic, optical, or solid state media. The instructions may form an application program tangibly embodied on a computer-readable medium such as any of the media listed above or known to those of skill in the art.

**Claims**

1. A method of displaying a neutral facial expression in a paused video, the method being **characterized by**:

   analyzing contiguous frames of a video to find neutral facial expressions (405);
   associating one of the neutral facial expression frame with each frame in the video (410);
   receiving a pause instruction that pauses the playback of the continuous frames on a video player (415), the pause occurring on a pause frame;
   synthesizing a set of frames that transition from the associated neutral facial expression frame to the pause frame (420);
   playing the synthesized frames in reverse (425), whereby the played frames transition from the pause frame to the associated neutral facial expression frame;
   displaying the neutral facial expression frame on the video player while the video is paused instead of displaying the pause frame (430).

2. The method of claim 1, wherein analyzing contiguous frames comprises analyzing video frames previously stored in the video player.

3. The method of claim 1, wherein analyzing contiguous frames comprises analyzing video frames being streamed to the video player.

4. The method of claim 1, wherein associating one of the neutral facial expression frame with each frame in the video comprises automatically selecting the neutral facial expression frame closest to a frame being analyzed.

5. The method of claim 4, wherein the neutral facial expression frame is detected using an active appearance model algorithm.

6. The method of claim 1, wherein pausing the playback of the continuous frames on a video player is **characterized by** pausing a video utilizing a user control of the video player.

7. The method of claim 1, wherein synthesizing a set of frames that transition the associated neutral facial expression frame to the pause frame comprises identifying frames in the video which correspond to the transition.

8. The method of claim 1, wherein synthesizing a set of frames that transition the associated neutral facial expression frame to the pause frame comprises substituting the pause frame with the associated neutral facial expression frame.

9. The method of claim 1, further **characterized by**:

upon release of the pause instruction, plays the synthesized frames in an order from the neutral facial expression to the pause frame before continuing to play the video.

10. An apparatus to display a neutral facial expression in a paused video, the apparatus being **characterized by**:

a processor to detect neutral facial expressions in a set of contiguous video frames (550), wherein the processor associates one of the neutral facial expression frames with each frame in a video played on the apparatus;
a user control interface (530) for receiving a pause instruction to pause the video played by the apparatus, the pause occurring on a pause frame;
the apparatus synthesizing a set of frames that transition the associated neutral facial expression frame to the pause frame;
the apparatus playing the synthesized frames in reverse order, whereby the played frames transition from the pause frame to the associated neutral facial expression frame;
a display device (528) for displaying the neutral facial expression frame on the video player while the video is paused instead of displaying the pause frame.

11. The apparatus of claim 10, wherein the processor detects a neutral facial expression using an active appearance algorithm.

12. The apparatus of claim 10, wherein the user interface comprises a mouse, keyboard, pushbuttons, touch screen, or remote control.

13. The apparatus of claim 10, wherein the processor associates one of the detected neutral facial expression frames that is closest to a particular video frame.

14. The apparatus of claim 10, wherein the processor detects a neutral facial expression from one of streamed video frames or stored video frames.

15. The apparatus of claim 10, wherein the apparatus, upon release of the pause instruction, plays the synthesized frames in an order from the neutral facial expression to the pause frame before continuing to play the video.

Fig. 1

Fig. 2a

Fig. 2b

Fig. 2c

Fig. 3

**400**

Analyzing video frames to find a neutral
expression    405

Associating a neutral facial expression
frame to each frame in a video    410

Pausing the displayed playing of a
video    415

Synthesizing a set of frames that can
transition the associated neutral
expression frame to the target pause
frame    420

Playing the synthesized frames in
reverse.    425

Displaying a neutral facial expression
instead of the paused frame    430

Playing the synthesized frames in
forward order once the pause is
cancelled.    435

**Fig. 4**

Flow Diagram

500

Fig. 5

Block Diagram

Europäisches
Patentamt

European
Patent Office

Office européen
des brevets

# EUROPEAN SEARCH REPORT

Application Number

EP 14 30 6001

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2012 004722 A (PANASONIC CORP) 5 January 2012 (2012-01-05) * paragraphs [0002] - [0003] * * paragraphs [0005] - [0009] * * paragraphs [0021] - [0036] * * paragraphs [0048] - [0050] * * paragraphs [0068] - [0069] * * paragraphs [0084] - [0086] * * figures 1-12 * ----- | 1-15 | INV. G11B27/00 H04N21/433 H04N21/44 |
| Y | YANG ET AL: "Facial expression editing in video using a temporally-smooth factorization", COMPUTER VISION AND PATTERN RECOGNITION (CVPR), 2012 IEEE CONFERENCE ON, IEEE, 16 June 2012 (2012-06-16), pages 861-868, XP032232158, DOI: 10.1109/CVPR.2012.6247759 ISBN: 978-1-4673-1226-4 * the whole document * ----- | 1-15 | |
| Y | JP 2010 063066 A (NIPPON KOGAKU KK) 18 March 2010 (2010-03-18) * paragraphs [0004] - [0009] * * paragraphs [0018] - [0020] * * paragraphs [0023] - [0029] * * paragraphs [0032] - [0034] * * paragraph [0042] * * figures 1-4 * ----- | 1-15 | TECHNICAL FIELDS SEARCHED (IPC)<br><br>H04N G11B G06K |
| Y | DALE ET AL: "Video face replacement", PROCEEDINGS OF THE 2011 SIGGRAPH ASIA CONFERENCE ON, SA '11, December 2011 (2011-12), page 1, XP055147211, New York, New York, USA DOI: 10.1145/2024156.2024164 ISBN: 978-1-45-030807-6 * the whole document * ----- | 1-15 | |

The present search report has been drawn up for all claims

| Place of search | Date of completion of the search | Examiner |
|---|---|---|
| Munich | 17 October 2014 | Fragua, Miguel Angel |

EPO FORM 1503 03.82 (P04C01)

## ANNEX TO THE EUROPEAN SEARCH REPORT
## ON EUROPEAN PATENT APPLICATION NO.

EP 14 30 6001

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2014

| Patent document cited in search report | Publication date | Patent family member(s) | Publication date |
|---|---|---|---|
| JP 2012004722 A | 05-01-2012 | JP 2012004722 A<br>WO 2011158399 A1 | 05-01-2012<br>22-12-2011 |
| JP 2010063066 A | 18-03-2010 | NONE | |

EPO FORM P0459

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. ASTHANA et al.** Evaluating AAM Fitting Methods for Facial Expression Recognition. *Proceedings of the Workshops of the 3rd International Conference on Affective Computing and Intelligent Interaction,* 2009

- **M. MULLER ; B. HEIDELBERGER ; M. TESCHNER ; M. GROSS.** Meshless deformations based on shape matching. *ACM Trans. on Graphics,* July 2005, vol. 24 (3), 471-478